# EUROPÄISCHE PATENTSCHRIFT

(11) **EP 1 339 794 B1**
(45) Veröffentlichungstag und Bekanntmachung des Hinweises auf die Patenterteilung: **20.12.2006**
(21) Anmeldenummer: 01972066.3
(22) Anmeldetag: 17.09.2001
(51) Int. Cl.: C08L 59/00, C08K 5/00, C08K 5/098

(54) **SCHLAGZÄHE POLYOXYMETHYLEN-FORMMASSEN MIT GERINGER EMISSION, IHRE VERWENDUNG UND DARAUS HERGESTELLTE FORMKÖRPER**
IMPACT-RESISTANT POLYOXYMETHYLENE MOULDING COMPOUNDS WITH A LOW EMISSION, THE USE THEREOF AND MOULDED BODIES PRODUCED THEREFROM
MATIERES MOULABLES RESILIENTES A BASE DE POLYOXYMETHYLENE, A FAIBLE EMANATION, LEUR UTILISATION ET CORPS MOULES FABRIQUES A PARTIR DE CES MATIERES

(30) Priorität: 26.09.2000 DE 10047488; 01.06.2001 DE 10126787
(43) Veröffentlichungstag der Anmeldung: 03.09.2003
(73) Patentinhaber: Ticona GmbH, 65451 Kelsterbach (DE)
(72) Erfinder: DISCH, Stefan, 61462 Königsstein (DE); WITAN, Kurt, 65719 Hofheim (DE); HOFMANN, Ernst, 63808 Haibach (DE); KURZ, Klaus, 65451 Kelsterbach (DE)
(86) Internationale Anmeldenummer: PCT/EP2001/010710
(87) Internationale Veröffentlichungsnummer: WO 2002/026884

(56) Entgegenhaltungen:
- EP-A- 0 605 736
- EP-A- 0 853 098
- US-A- 5 369 177
- US-A- 5 393 813

## Beschreibung

Die vorliegende Erfindung betrifft schlagzäh modifizierte Polyoxymethylen-Formmassen, die zur Herstellung von Formteilen oder Extrudaten geeignet sind. Die damit hergestellten Produkte sind besonders stabil bei der Verarbeitung und zeichnen sich durch niedrige Formaldehydemission und geringen Geruch aus.

Diese Anmeldung bezieht sich auf die deutschen Patentanmeldungen DE 10126787.8 und DE 10047488.8, auf die hiermit ausdrücklich verwiesen wird.

Seit ihrer Markteinführung vor etwa 40 Jahren haben sich Polyoxymethylene als äußerst nützliche technische Werkstoffe in vielen Anwendungen durchgesetzt. Besonders als Konstruktionswerkstoff im Automobilbau, in der Elektroindustrie und in der Medizintechnik findet Polyoxymethylen breite Anwendung. Dabei wird von Polyoxymethylen-Formmassen ein bestimmtes Niveau an mechanischen Eigenschaften wie Steifigkeit, Härte und Zähigkeit gefordert, das den Einsatz dieser Materialien für technische Bauteile wie Zahnräder, Hebel und viele andere erst möglich macht. Die veröffentlichten Werte für die Streckspannung liegen zwischen 60 und 70 N/mm². Für den Zug-E-Modul von unmodifizierten Copolymeren findet man Werte zwischen 2400 und 3100 N/mm². Für die Bruchdehnung findet man Werte zwischen 10 und 30 %.

Für eine Reihe von potentiellen Anwendungen weisen Polyoxymethylene allerdings eine zu geringe Schlagzähigkeit, auf. Für solche Anwendungen ist es zusätzlich wünschenswert, daß die Produkte auch bei tieferen Umgebungstemperaturen ihre guten Schlagzähigkeitseigenschaften behalten.

Es ist bekannt, daß die Zähigkeit von Polyoxymethylenen durch Zusatz von Schlagzähmodifikatoren verbessert werden kann. Als Schlagzähmodifikatoren werden organische Additive wie vemetzte oder unvernetzte Elastomere oder Pfropfcopolymere aus einem kautschukelastischen, einphasigen Kern und einer harten Pfropfhülle eingesetzt. Schlagzähmodifizierte Polyoxymethylen-Formmassen sind aus der Patentliteratur bekannt, z.B. mit Polyurethanen modifiziertes Polyoxymethylen (DE 1 193 240), mit einer zweiphasigen Mischung aus Polybutadien und Styrol/Acrylnitril (ABS) modifiziertes Polyoxymethylen (DE 1 931 392), mit einem auf Basis Acrylester-Butadien hergestellten Pfropfcopolymer modifiziertes Polyoxymethylen (DE 1 964 156), ein mit modifizierten Polysiloxanen bzw. Silicon-Kautschuken ausgerüstetes Polyoxymethylen (DE 2 659 357) und schließlich mit einem Pfropfcopolymer, das aus einem kautschukelastischen, einphasigen Kern auf Basis von Polydien und einer harten, ein- oder mehrphasigen Pfropfhülle, z.B. aus Poly(alkyl)acrylaten, Poly(alkyl)acrylnitrilen oder Polystyrol, aufgebaut ist, modifiziertes Polyoxymethylen (EP 0156285 B1).

Diese Fremdstoffe führen jedoch dazu, daß bei der Verarbeitung Materialabbau mit nachfolgender Formaldehydfreisetzung auftreten kann, was die Einsetzbarkeit des Materials zur Herstellung von Formteilen stark beeinträchtigt. Schlagzäh modifizierte Polyoxymethylen-Formmassen weisen daher oft eine hohe Formaldehydemission auf. In den Schlagzähmodifikatoren enthaltene Verunreinigungen wie Restmonomere oder Lösungsmittel werden bei der Verarbeitung von schlagzäh modifizierten Polyoxymethylen-Formmassen und während des Gebrauches der daraus hergestellten Formteile freigesetzt. Die Emission von Formaldehyd und Verunreinigungen der Schlagzähmodifikatoren führen zu einem unangenehmen Geruch, was den Einsatz dieser Materialien in vielen Anwendungsfeldern beeinträchtigt.

Damit es bei der Verarbeitung von schlagzäh modifizierten Polyoxymethylen-Formmassen zu keiner Beeinträchtigung der Produkt- und Materialeigenschaften kommt, muß insbesondere der Materialabbau in schlagzäh modifizierten Polyoxymethylen-Formmassen unterdrückt werden. Zu diesem Zweck werden Stabilisatoren zugesetzt. In EP 0156285 werden als Stabilisatoren für die Polyacetalphase Polyamide, Amide mehrbasiger Carbonsäuren, Amidine, Hydrazine, Harnstoffe, Poly(N-vinyllactame) und Erdalkalisalze von aliphatischen, vorzugsweise hydroxylgruppenhaltigen, ein- bis dreibasigen Carbonsäuren mit 2-20 Kohlenstoffatomen genannt. Darüber hinaus werden Oxidationsstabilisatoren und Lichtstabilisatoren genannt. Aber auch der Zusatz von Stabilisatoren konnte bislang dem Mangel der hohen Emission nicht abhelfen. Zudem führen bekannte Stabilisatoren und Stabilisatorsysteme, die eine Verminderung der Formaldehydemission bewirken zu einer Beeinträchtigung des mechanisches Eigenschaftsprofils.

Alle bisher beschriebenen Zusammensetzungen für schlagzähmodifizierte Polyoxymethylen-Formmassen führen nicht zu hinreichend geringer Formaldehydemission bei gleichzeitigem Erhalt des mechanischen Eigenschaftsprofils.

Die Aufgabe der vorliegenden Erfindung besteht darin, Polyoxymethylen-Formmassen zur Verfügung zu stellen, bei denen die bislang beobachtete Formaldehydemission unter Erhalt des mechanischen Eigenschaftsprofils vermindert ist. Die Formteile, die aus diesen Formmassen hergestellt werden, sollen einen geringen Geruch aufweisen.

Die Aufgabe wird gelöst durch eine Polyoxymethylen Formmasse enthaltend:
(A) 0.01 - 1.0 Gew. % eines zyklischen Stabilisators, der mindestens ein Stickstoffatom im Ring enthält,
(B) 0.001 - 0.5 Gew. % eines Salzes einer Carbonsäure,
(C)5 - 50 Gew.-% eines Schlagzähmodifikators,
(D) 0.0 - 2.0 Gew. % einer sterisch gehinderten Phenolverbindung,
(E) 0.0 -1.0 Gew. % mindestens eines Stabilisators aus der Gruppe der Benzotriazolderivate oder Benzophenonderivate oder aromatische Benzoatderivate,
(F) 0.0 - 0.8 Gew. % eines sterisch gehinderten Amins zur Lichtstabilisierung (HALS),
(G)ad 100 Gew. % eines Polyoxymethylen Polymeren.

Überraschend wurde gefunden, daß die erfindungsgemäßen Polyoxymethylen Formmassen eine wesentlich reduzierte Formaldehydemission gegenüber dem bisherigen Stand der Technik besitzen. Die Verringerung der Emission wird durch die Wechselwirkung zwischen dem zyklischen Stabilisator mit mindestens einem Ring-Stickstoffatom und dem Carbonsäuresalz hervorgerufen. Im Gegensatz zu anderen Stabilisatorsystemen, die zur Reduktion der Emission von Polyoxymethylen-Formmassen eingesetzt werden können, bleibt das mechanische Eigenschaftsniveau, besonders die Schlagzähigkeit und Festigkeit, erhalten.

Die erfindungsgemäße Formmasse enthält 0.01 - 1.0 Gew.-%, bevorzugt 0.03 - 0.3 Gew.-%, eines zyklischen Stabilisators, Komponente (A), der mindestens ein Stickstoffatom in Ring enthält (A). Beispiele sind Pyrrolidin, Piperidin, Pyrrol, Pyridin, Purin, Indol, Carbazol, Tryptophan, Oxazol, Imidazol, Thiazol, Picolin, Lutidin, Collidin, Chinolin, Pyridazin, Pyrimidin, Pyrazin und ihre Derivate. Vorteilhaft sind heterocyclische Verbindungen mit mindestens einem Stickstoffatom als Heteroatom, welches entweder mit einem aminosubstituierten Kohlenstoffatom oder einer Carbonylgruppe benachbart ist, wie zum Beispiel Pyridazin, Pyrimidin, Pyrazin, Pyrrolidon, Aminopyridin und davon abgeleitete Verbindungen. Vorteilhafte Verbindungen dieser Gattung sind Aminopyridin und davon abgeleitete Verbindungen. Geeignet sind prinzipiell alle Aminopyridine, wie zum Beispiel Melamin, 2,6-Diaminopyridin, substituierte und dimere Aminopyridine sowie Pyrrolidon und davon abgeleitete Verbindungen und aus diesen Verbindungen hergestellte Mischungen. Beispiele für geeignete Pyrrolidone sind zum Beispiel Imidazolidinon und davon abgeleitete Verbindungen, wie zum Beispiel Hydantoin, dessen Derivate besonders vorteilhaft sind, insbesondere vorteilhaft sind von diesen Verbindungen Allantoin und seine Derivate. Besonders vorteilhaft sind weiter - Triamino-1,3,5-Triazin (Melamin) und seine Derivate, wie zum Beispiel Melamin-Formaldehydkondensate und Methylolmelamin. Ganz besonders bevorzugt sind Melamin, Methylolmelamin, Melamin-Formaldehydkondensate und Allantoin. Die zyklischen Stabilisatoren, die mindestens ein Stickstoffatom im Ring enthalten, können einzeln oder in Kombination verwendet werden.

Als Komponente (B) eingesetzt werden 0.001-0.5 Gew.-% eines Metallsalzes einer Carbonsäure. Vorteilhaft sind Salze von Fettsäuren, insbesondere Salze von höheren Fettsäuren mit 10 - 32 Kohlenstoffatomen, bevorzugt 14- 32 Kohlenstoffatomen, besonders bevorzugt sind Salze der Montansäuren und Stearinsäure. Bevorzugte Metalle sind solche, die als ein- oder zweiwertige Ionen vorkommen, z.B. Alkali- und Erdalkalimetalle, insbesondere Erdalkalimetalle. Besonders bevorzugt sind Magnesium und Calcium, zum Beispiel Calciumstearat. Als Komponente (B) ganz besonders bevorzugt ist Magnesiumstearat.

Als Komponente (C) eingesetzt werden 5-50 Gew.-%, bevorzugt 5 bis 40 Gew.-%, besonders bevorzugt 7 bis 30 Gew.-% eines Schlagzähmodifikators. Als Schlagzähmodifikator einsetzbar sind einzeln oder als Gemisch Polyurethane, zweiphasige Mischungen aus Polybutadien und Styrol/Acrylnitril (ABS), modifizierte Polysiloxane bzw. Silicon-Kautschuke oder Pfropfcopolymere aus einem kautschukelastischen, einphasigen Kern auf Basis von Polydien und einer harten Pfropfhülle (Kern-Hüllen- bzw. Core-Shell-Struktur). Im letzteren Fall besteht Komponente (C) aus Partikeln, die überwiegend, vorzugsweise zu mehr als 70 % eine Kern-Hüllen-Struktur aufweisen. Dabei wird der Kern von einer kautschukelastischen Polymerphase gebildet, auf die die harte Hülle, die auch aus mehreren Schichten bestehen kann, aufgepfropft ist. Der Kern ist bevorzugt einphasig, das heißt, daß der Kern überwiegend, vorzugsweise vollständig, aus der kautschukelastischen Weichphase besteht und nur in geringen Mengen, vorzugsweise keine, Einschlüsse aus harten Polymerbestandteilen der Hülle enthält. Das Pfropfcopolymer besteht meist zu 40 bis 95 Gew.-%, vorteilhaft zu 60 bis 90 Gew.-%., besonders vorteilhaft zu 70 bis 80 Gew.-% aus dem kautschukelastischen Kern. Der Anteil Der Hülle (Schalen) beträgt 5 bis 60 Gew.-%, vorteilhaft 10 bis 40 Gew.-%, besonders vorteilhaft 20 bis 30 Gew.-%. Der Kern besteht im Allgemeinen aus Polydienen, wie z. B. Polybutadien oder Polyisopren und kann bis zu 10 Gew.-%, vorteilhaft bis zu 5 Gew.-%, an Comonomer-Einheiten enthalten. Als Comonomer lassen sich vorteilhaft Styrol oder Acrylnitril einsetzen. Das Kernpolymer kann auch vernetzt sein und einen Gelanteil, gemessen in Toluol, von im Allgemeinen größer als 70 % und vorzugsweise größer als 80% besitzen. Als Vernetzer läßt sich zum Beispiel Divinylbenzol einsetzen. Die Hülle der Partikel besteht aus harten Polymeren, welche auf den Kern als Pfropfsubstrat aufgepfropft sind. Dabei kann die Hülle ein- oder mehrschalig, vorteilhaft zweischalig, ausgebildet sein. Bei mehr als einer Hülle bestehen die unterschiedlichen Schichten vorteilhaft aus unterschiedlichen Polymeren oder Copolymeren. Vorteilhaft ist hierbei die erste Schicht vernetzt. Gegebenenfalls können aber auch die übrigen Schichten vernetzt sein.

Als Monomere, die zu geeigneten Polymeren der Partikelhülle führen, sind beispielsweise ungesättigte Nitrile, Acrylate, Methacrylate, Vinylester, Styrolderivate geeignet, vorteilhaft sind Acrylnitril, Methacrylnitril, Acrylate und Methacrylate mit einer Alkoholkomponente, die 1 bis 6, bevorzugt 1 bis 4 Kohlenstoffatome aufweist, wie zum Beispiel Methylacrylat, Ethylacrylat, Propylacrylat, n-Butylacrylat, Methylmethacrylate, Ethylmethacrylat, Propylmethacrylat, Butylmethacrylat, tert.-Butylmethacrylat. Als Vinylester vorteilhaft einsetzbar sind außerdem Vinylacetat, Vinylether, N-Vinyl-N-methylacetamid, Vinylpyrrolidon, als Styrolderivate können beispielsweise Styrol, α-Methylstyrol und Vinyltoluol vorteilhaft eingesetzt werden. Zum Aufbau der Hülle können auch Copolymere aus mindestens zwei der vorgenannten Monomergruppen und Monomere eingesetzt werden, insbesondere Copolymere der genannten Styrolderivate mit den übrigen Monomeren. Besonders vorteilhaft sind Copolymere die aus einer Mischung enthaltend 20 bis 80 Gew.-% Acrylnitril oder Methacrylnitril mit 80 bis 20 Gew.-% der übrigen genannten Monomere, insbesondere Acrylate, Methacrylate und Vinylester, hergestellt werden wurden. Bevorzugt sind außerdem Pfropfpolymerisate, die einen zweischaligen Hüllenaufbau besitzen, wobei die erste Schale aus Polystyrol, die zweite, äußere Schale aus einem Poly(meth)acrylat, welches besonders bevorzugt teilweise vernetzt ist. Als vernetzende Monomere können prinzipiell alle hierfür geeigneten Verbindungen eingesetzt werden wie multifunktionelle Olefine, beispielsweise Divinylbenzol, Ethylenglykoldimethacrylat, Butylenglykoldimethacrylat, oder auch Triallylcyanurat.

Die Glastemperaturen, der vorstehend beschriebenen Komponente (C) liegt erfindungsgemäß zwischen -40 °C und -120 °C, bevorzugt unterhalb von -60 °C, insbesondere zwischen -80 °C und -120 °C. Die Herstellung der als Komponente (C) einsetzbaren Pfropfcopolymeren mit Kern-Hülle-Struktur ist bekannt und kann durch Einstufenpolymerisation im Falle einer einschaligen Hülle oder durch Mehrstufenpolymerisation im Falle einer mehrschaligen Hülle erfolgen, wie zum Beispiel in der Patentschrift US 3985704 beschrieben, worauf Bezug genommen wird. Die Pfropfcopolymerisation wird mittels wasserlöslicher Initiatoren oder mittels aktivierter Initiatorsysteme, deren eine Komponente zumindest wasserlöslich ist durchgeführt, wie zum Beispiel beschrieben in C.B. Bucknall, "Toughened Plastics", Seite 98, Applied Science Publisher LTD, 1977 (London)). Bei der ein-oder mehrstufigen Pfropfcopolymerisation geht man von einem Polydien aus, das vorzugsweise in Form eines wäßrigen Latex mit definierter mittlerer Teilchengröße, besonders bevorzugt im Bereich von 0,1 bis 5 µm vorliegt und welches ganz besonders bevorzugt partiell vernetzt ist.

Zur Herstellung polymerisiert man das Monomer oder das Monomergemisch in Gegenwart des Polydiens, wobei der überwiegende Teil der Monomeren auf die Polydienpartikel aufgepfropft wird. Die Menge an Polydien beträgt im Allgemeinen 40 bis 95 Gew.-% und die Menge des Monomeren oder Monomergemisches 5 bis 60 Gew.-%, jeweils bezogen auf die Gesamtmenge. Die erreichte Pfropfausbeute bewegt sich zwischen 60 und 95 %, vorzugsweise zwischen 80 und 90 %. Die Pfropfpolymerisation wird in Lösung oder Emulsion, bevorzugt in wäßriger Dispersion durchgeführt. Hierzu wird der feinteilige Polydienlatex unter Zusatz der üblichen Polymerisationshilfsstoffe wie Emulgier- bzw. Suspendierhilfsmittel, Radikalinitiatoren, Regler etc. vorgelegt, das Monomere oder die Monomermischung zugegeben und bei Temperaturen zwischen 30 und 95°C, vorzugsweise 50 bis 80 °C polymerisiert. Im Falle einer Einstufenreaktion ist der Initiator wasserlöslich, als Initiatoren lasen sich beispielsweise wasserlösliche Peroxide, Perkarbonate oder Perborate einsetzen. Bei einem Mehrkomponenten-Initiatorsystem (Redoxsystem) muß zumindest eine Komponente wasserlöslich sein. Als Beispiel für Emulgatoren, auch Dispergatoren genannt, lassen sich aliphatische und aromatische Sulfate, Sulfonate, Salze von Carbonsäuren, wie zum Beispiel Dresinate, verwenden. Die hierfür geeigneten Verbindungen sind dem Fachmann allgemein bekannt.

Bei einer Mehrstufenreaktion erfolgt die Pfropfpolymerisation und die Aufarbeitung im Allgemeinen wie in US 3985704 beschrieben. Zur Ausbildung einer mehrschaligen Hülle wird zunächst ein Monomer oder eine Monomermischung, beispielsweise Styrol, auf das Kernpolymer, beispielsweise Butadien-StyrolCopolymer, aufgepfropft und danach ein anderes Monomer oder Monomerengemisch eingesetzt, gegebenenfalls in Anwesenheit eines Vernetzers.

Die mittlere Teilchengröße der Partikel beträgt zweckmäßigerweise 0.1 bis 5 µm.

Als Komponente (C) einsetzbare Pfropfcopolymere sind auch Materialien verwendbar, bei der der Kern überwiegend oder vollständig aus vorzugsweise teilvernetzten Polyacrylsäureestern oder Polymethacrylsäureestern besteht, deren Alkoholkomponente 1 bis 15 Kohlenstoffatome, vorzugsweise 1 bis 8 Kohlenstoffatome enthält. Als Comonomere kommen olefinische Monomere in Frage, vorteilhaft Butadien, Cyclooctadien, Vinylether und Halogenalkylacrylate. Der Gelanteil, gemessen in Toluol, beträgt bevorzugt mindestens 50%, besonders bevorzugt mindestens 70%. Für die Pfropfhülle können die oben beschriebenen Monomeren und Monomerengemische eingesetzt werden. Auch die Teilchengrößen liegen im gleichen Bereich. Pfropfpolymere auf Basis von Polyacrylsäureestern und Polymethacrylsäureestern sind zum Beispiel beschrieben in DE 1964156, DE 2116653, EP 50265, EP 60601 und EP 64207, worauf Bezug genommen wird. Der Kern des Pfropfpolymeren kann auch vollständig oder teilweise aus einem Silikonkautschuk und/oder unverletzten Organopolysiloxanen bestehen. Auf diesen Kern, der vorzugsweise pfropfaktive funktionelle Gruppen enthält, können die weiter oben beschriebenen Monomere und/oder Monomergemische aufgepfropft werden. Diese Materialien sind beispielsweise in DE 2659357 beschrieben. Die Komponente (C) enthält vorzugsweise, insbesondere wenn der Kern des Pfropfpolymeren aus teilvernetzten Polyacrylsäureestern oder Polymethacrylsäureestern besteht, ein Verdünnungsmittel. Das Verdünnungsmittel ist eine niedrig schmelzende, vorteilhaft polymere Substanz, die in der Schmelze mit den als Schtagzähmodifikator eingesetzten Pfropfpolymeren gut mischbar ist. Besonders vorteilhaft ist der Einsatz dieses Verdünnungsmittels, wenn die Pfropfpolymeren so stark vernetzt sind, daß diese sich nicht mehr im Verdünnungsmittel lösen, sich ein Zweiphasensystem bildet und die Grenzflächenspannung eine feine Verteilung der Pfropfpolymeren im Verdünnungsmittel zuläßt. Bevorzugt befindet sich das Pfropfpolymere überwiegend im Randbereich des Zweiphasensystems. Bei zunehmender Menge an Pfropfpolymer findet sich dieses auch zunehmend im Kern und mit weiter zunehmender Menge des Pfropfpolymeren auch außerhalb des Zweiphasensystems im Matrixpolymeren, der Komponente (G). Ganz besonders vorteilhaft ist eine gleichmäßige Verteilung des Zweiphasensystems und des Pfropfpolymeren in der Komponente (G), insbesondere wenn sich das Pfropfpolymere überwiegend am Rand des Zweiphasensystems befindet. Der Schmelzpunkt des Verdünnungsmittels sollte kleiner 250°C, bevorzugt 180 bis 210°C betragen. Die Menge des Verdünnungsmittels liegt bei 10 bis 95%, vorteilhaft bei 30 bis 70%, besonders vorteilhaft bei 40 bis 60%, bezogen auf die Summe aus Pfropfpolymer und Verdünnungsmittel. Ganz besonders vorteilhaft einsetzbar als Verdünnungsmittel sind Polyurethane, segmentierte Copolyester und Ethylen-Vinylacetat-Copolymere. Weitere geeignete Verdünnungsmittel sind dem Fachmann bekannt und beispielsweise beschrieben in DE 2818240 und DE 2523991. Das Verdünnungsmittel kann vorteilhaft vor der Zugabe zur Komponente (G) mit dem Pfropfpolymeren gemischt werden.

Als Schlagzähkomponente, Komponente (C), sind außerdem Polyurethane, vorzugsweise thermoplastische Polyurethane einsetzbar. Bei den erfindungsgemäß einsetzbaren Polyurethanen handelt es sich um bekannte Produkte, die beispielsweise in DE 1193240, DE 2051028 und im Kunststoff-Taschenbuch, (Saechtling, 27. Ausgabe, Hanser Verlag 1998) auf den Seiten 523 bis 542 beschrieben sind, worauf Bezug genommen wird. Sie werden in bekannter Weise durch Polyaddition aus Polyisocyanaten, insbesondere Diisocyanaten, Polyestern, Polyethern, Polyesteramiden, Polyacetalen oder anderen geeigneten Hydroxy- bzw. Aminoverbindungen, wie beispielsweise hydroxyliertem Polybutadien, oder Mischungen aus den vorgenannten Verbindungen hergestellt. Gegebenenfalls werden auch Kettenverlängerer wie niedermolekulare Polyole, insbesondere Diole, Polyamine, insbesondere Diamine oder Wasser eingesetzt.

Geeignete Diisocyanate sind beispielsweise Diisocyanate der allgemeinen Formel I

OCN-R-NCO I

wobei R ein zweiwertiger, geradkettiger oder verzweigter aliphatischer Rest mit 1 bis 20, vorzugsweise 2 bis 12 Kohlenstoffatomen oder ein zweiwertiger cycloaliphatischer Rest mit 4 bis 20, vorzugsweise 6 bis 15 Kohlenstoffatomen oder ein zweiwertiger, substituierter oder unsubstituierter aromatischer Rest mit 6 bis 25, vorzugsweise 6 bis 15 Kohlenstoffatomen ist.

Als zweiwertiger, geradkettiger oder verzweigter aliphatischer Rest mit 1 bis 20, vorzugsweise 2 bis 12 Kohlenstoffatomen oder ein zweiwertiger, cycloaliphatischer Rest mit 4 bis 20, vorzugsweise 6 bis 15 Kohlenstoffatomen oder ein zweiwertiger, substituierter oder unsubstituierter aromatischer Rest mit 6 bis 25, vorzugsweise 6 bis 15 Kohlenstoffatomen ist.

Als zweiwertiger aliphatischer Rest kommt zum Beispiel der Alkylidenrest -(CH2)ₙ-mit n = 2 bis 12 in Frage, wie Ethyliden-, Propyliden-, Pentamethylen-, Hexamethylenrest und dergleichen oder der 2-Methylpentamethylen-, der 2,2,4-Trimethyl-hexamethylen- oder der 2,4,4-Trimethylhexamethylenrest. Diisocyanate diesen Typs, die besonders bevorzugt werden, sind das Hexamethylen-diisocyanat, sowie 2,2,4- und 2,4,4-Trimethylhexamethylendiisocyanat.

Wenn R in obiger Formel I einen cycloaliphatischen Rest bedeutet, so ist dies bevorzugt der unsubstituierte oder substituierte Cyclohexanrest. Beispiele für Diisocyanate dieses Typs sind 1,2- oder 1,4-Di-(iso-cyanatomethyl)-cyclohexan oder Isophorondiisocyanat.

R kann in obiger Formel I auch eine Kombination von zweiwertigen offenkettigen aliphatischen und cycloaliphatischen Resten darstellen und beispielsweise die Bedeutung 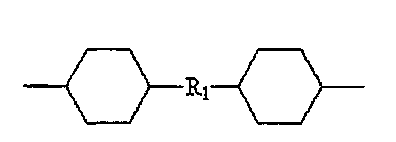 haben, worin R₁ einen gesättigten, geradkettigen oder verzweigten aliphatischen Rest mit 1 bis 8, vorzugsweise 1 bis 3 Kohlenstoffatomen bedeutet. Die beiden Ringe stehen hier vorzugsweise für das unsubstituierte Cyclohexan, während R₁ vorzugsweise die Methylen-, Ethylen-, Methylmethylen- oder Dimethylmethylengruppe bedeutet.

Falls R einen offenkettigen zweiwertigen Rest darstellt, so steht er vorzugsweise für einen unverzweigten Alkylidenrest -(CH2)ₙ- mit n= 2 bis 12. Beispiele hierfür sind der Ethyliden-, Propyliden-, Pentamethylen- und der Hexamethylenrest sowie der 2-Methylpentamethylen-, der 2,2,4-Trimethyl-hexamethylen- oder der 2,4,4-Trimethylhexamethylenrest. Diisocyanate dieses Typs, die besonders bevorzugt werden, sind das Hexamethylen-diisocyanat sowie 2,2,4- und 2,4,4-Trimethylhexamethylendiisocyanat.

Wenn R in der obigen Formel 1 einen zweiwertigen aromatischen Rest darstellt, so ist dies bevorzugt der Toluol-, Diphenylmethan-, Phenylen- oder Naphthalinrest. Beispiele für entsprechende Diisocyanate sind: 2,4-Toluoldiisocyanat, 2,6-Toluoldiisocyanat, Diphenyl-methan-4,4'-diisocyanat, 3,3'-Dimethyldiphenylmethan-4,4'-diisocyanat, 3,3'Dimethyl-4,4,'-diphenylen-diisocyanat (3,3'-Bitoluol-4,4'-diisocyanat), m-Phenylen-diisocyanat, p- Phenylen-diisocyanat, o- Phenylen-diisocyanat, Chlorphenylen-2,4-toluoldiisocyanat, 3,3'-Dichlordiphenyl-4,4'-diisocyanat, 4-Chlor-1,3-phenylendiisocyanat, 1,5-Naphthalindiisocyanat und 1,4-Naphthalindiisocyanat.

Wenn R in obiger Formel I einen cycloaliphatischen Rest bedeutet, so ist dies bevorzugt der unsubstituierte oder substituierte Cyclohexanrest. Beispiele für Diisocyanate dieses Typs sind 1,2- oder 1,4-Di-(iso-cyanatomethyl)-cyclohexan oder Isophorondiisocyanat.

Die Diisocyanate der Formel I können auch in oligomerer, beispielsweise in dimerer oder trimerer Form zum Einsatz kommen. Anstelle der Polyisocyanate können auch in bekannter Weise blockierte Polyisocyanate verwendet werden, die man aus den genannten Isocyanaten z.B. Umsetzung mit Phenol oder Caprolactam erhält.

Als aliphatische Polyhydroxylverbindungen kommen Polyether, wie Polyethylenglykolether, Polypropylenglykolether, und Polybutylenglykolether, Poly-1,4-butandiolether oder Mischpolyether aus Ethylenoxid und Propylenoxid in Betracht. Außerdem können für diesen Zweck Polyesteramide, Polyacetale und vorzugsweise aliphatische Polyester eingesetzt werden, wobei alle diese Verbindungen freie OH-Endgruppen besitzen.

Bei den vorzugsweise verwendeten aliphatischen Polyestern handelt es sich im Wesentlichen um unvernetzte Polyester mit Molekulargewichten von 500 bis 10000, vorzugsweise von 500 bis 5000. Hinsichtlich der Säurekomponente leiten sie sich von unverzweigten und/oder verzweigten aliphatischen Dicarbonsäuren ab, wie z.B. Dicarbonsäuren der allgemeinen Formel

HOOC-(CH₂)ₙ-COOH

mit n= 0 bis 20, vorzugsweise 4 bis 10, insbesondere Adipinsäure und Sebazinsäure. Auch cycloaliphatische Dicarbonsäuren, wie Cyclohexandicarbonsäuren sowie Gemische mit den obigen aliphatischen Dicarbonsäuren können für diesen Zweck eingesetzt werden.

Als Alkoholkomponente für diese Polyester kommen vor allem unverzweigte oder verzweigte aliphatische primäre Diole, wie z.B. Diole der allgemeinen Formel

HO-(CH₂)ₘ-OH

in Betracht, in der m=2 bis 12, vorzugsweise 2 bis 6 bedeutet. Genannt seien hier insbesondere 1,4-Butandiol, 1,6-Hexandiol und 2,2,-Dimethylpropandiol-1,3 sowie Diethylenglykol. Auch cycloaliphatische Diole, wie Bis-hydroxymethyl-cyclohexan, oder Gemische mit den aliphatischen Diolen sind hierfür geeignet.

Die Polyester können aus jeweils einer Dicarbonsäure und einem Diol, aber auch, wie erwähnt, aus Gemischen mehrerer Dicarbonsäuren und/oder mehreren Diolen hergestellt werden.

Als Kettenverlängerer bei der Herstellung der Polyurethane sind vor allem niedermolekulare Polyole, insbesondere Diole sowie Polyamine, insbesondere Diamine oder auch Wasser in Betracht zu ziehen.

Die erfindungsgemäß eingesetzten Polyurethane sind vorzugsweise thermoplastisch und damit vorzugsweise im wesentlichen unvernetzt, das heißt wiederholt ohne nennenswerte Zersetzungserscheinungen schmelzbar. Ihre reduzierten spezifischen Viskositäten, gemessen bei 30°C in Dimethylformamid, liegen in der Regel bei 0,5 bis 3 dl/g, vorzugsweise bei 1-2 dl/g. Die Werte für die Reißdehnungen betragen zweckmäßigerweise 800 bis 1500 %, vorzugsweise 1000 bis 1500 %, während die Shore-Härte A bei höchstens 90, vorteilhaft nicht über 81, vorzugsweise zwischen 50 und 85, besonders bevorzugt zwischen 60 und 80, insbesondere zwischen 65 und 80 und die Glastemperaturen zumeist nicht höher als 0°C, vorteilhaft nicht höher als -10°C, besonders vorteilhaft nicht höher als -20°C liegen.

Als sterisch gehinderten Phenolverbindung, Komponente (D), können 0.0 bis 2.0 Gew. %, bevorzugt 0.1 bis 1.0 Gew.-%, besonders bevorzugt 0.2 bis 1.0 Gew.-%, eingesetzt werden. Beispiele solcher Verbindungen sind Pentaerithrityl-tetrakis -[3-(3,5-di-tert.butyl-4-hydroxyphenyl)-propionat] (Irganox^{®} 1010, Firma Ciba Geigy), Triethylenglykol-bis-[3-(3-tert.butyl-4-hydroxy-5-methylphenyl)-propionat] (Irganox^{®} 245, Firma Ciba Geigy), 3,3'-bis[3-(3,5-di-tert.butyl-4-hydroxyphenyl)-propionohydrazid] (Irganox^{®} MD 1024, Fa. Ciba Geigy), Hexamethylenglykol-bis-[3-(3,5-di-tert.butyl-4-hydroxyphenyl)-propionat] (Irganox^{®} 259, Firma Ciba Geigy), 3,5-di-tert.butyl-4-hydroxytoluol (Lowinox^{®} BHT, Firma Great Lakes). Bevorzugt sind Irganox^{®} 1010 und vor allem Irganox^{®} 245.

Als Komponente (E), können mindestens ein Stabilisator aus der Gruppe der Benzotriazolderivate oder Benzophenonderivate oder aromatischen Benzoatderivate in einer Menge von 0.0 - 1.0 Gew. %, bevorzugt 0.0 - 0.8 Gew. %. enthalten sein. Bevorzugt ist 2-[2'-Hydroxy-3',5'-bis(1,1-dimethylbenzyl)phenyl]-benzotriazol, das als Tinuvin^{®} 234 (Firma Ciba Geigy) im Handel erhältlich ist.

Als Komponente (F) können 0.0 - 0.8 Gew. %, bevorzugt 0.0 - 0.5 Gew.-%, ganz besonders bevorzugt 0.4 Gew.-% eines sterisch gehinderten Amins zur Lichtstabiliserung (HALS) in der erfindungsgemäßen Formmasse enthalten sein. Bevorzugt sind 2,2,6,6-tetramethyl-4-piperidyl-Verbindungen, z.B. Bis-(2,2,6,6-tetramethyl-4-piperidyl)-sebazat (Tinuvin^{®} 770, Firma Ciba Geigy) oder das Polymer aus Bernsteinsäuredimethylester und 1-(2-Hydroxyethyl)-4-hydroxy-2,2,6,6-tetramethyl-4-piperidin (Tinuvin^{®} 622, Firma Ciba Geigy).

Die als Basismaterial für die erfindungsgemäßen Formmassen verwendeten Polyoxymethylenpolymere (G) können Polyoxymethylenhomo- oder copolymere sein. Derartige Polymere sind dem Fachmann bekannt und in der Literatur beschrieben. Die Homopolymere werden im allgemeinen durch Polymerisation von Formaldehyd oder Trioxan hergestellt, wobei die Polymerisation kationisch oder anionisch initiiert werden kann. Bevorzugt sind jedoch Polyoxymethylencopolymere, die neben Oxymethyleneinheiten noch Oxyalkyleneinheiten enthalten, wobei die Alkylengruppen 2 -8 Kohlenstoffeinheiten, linear oder verzweigt, enthalten können. Bei den Polyoxymethylenen (POM), wie sie beispielsweise in der DE-A 29 47 490 beschrieben sind, handelt es sich im allgemeinen um unverzweigte lineare Polymere, die in der Regel mindestens 80 %, vorzugsweise mindestens 90 %, Oxymethyleneinheiten (-CH₂O-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind solche Polymere, deren Hydroxylendgruppen in bekannter Weise chemisch gegen Abbau stabilisiert sind, z.B. durch Veresterung oder Veretherung. Copolymere sind Polymere aus Formaldehyd oder seinen cyclischen Oligomeren, insbesondere Trioxan, und cyclischen Ethern, cyclischen Acetalen und/oder linearen Polyacetalen. Derartige Polyoxymethylenhomo- oder Copolymerisate sind dem Fachmann an sich bekannt und in der Literatur beschrieben. Ganz allgemein weisen diese Polymere mindestens 50 mol-% an wiederkehrenden Einheiten -CH₂0- in der Polymerhauptkette auf. Die Homopolymeren werden im allgemeinen durch Polymerisation von Formaldehyd oder Trioxan hergestellt, vorzugsweise in der Gegenwart von geeigneten Katalysatoren. Besonders geeignete Katalysatoren sind beispielsweise Bortrifuorid und Trifluormethansulfonsäure.
Im Rahmen der Erfindung werden Polyoxymethylencopolymere als Komponente (G) bevorzugt, insbesondere solche, die neben den wiederkehrenden Einheiten -CH₂O-noch bis zu 50, vorzugsweise von 0.1 bis 20 und insbesondere 0.5 bis 10 mol-% an wiederkehrenden Einheiten 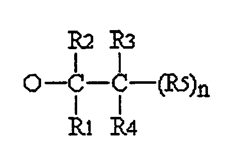 enthalten, wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine -CH₂-, -CH₂O-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 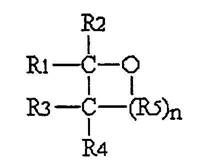 wobei R¹ bis R⁵ und n die obengenannte Bedeutung haben. Als Beispiele seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether sowie lineare Oligo- oder Polyformale wie Polydioxolan oder Polydioxepan als Comonomere genannt.

Besonders vorteilhaft sind Copolymere aus 99,5 - 95 Mol-% Trioxan und 0,5 bis 5 mol-% einer der vorgenannten Comonomere.

Als Komponente (G) ebenfalls geeignet sind Oxymethylenterpolymerisate, die beispielsweise durch Umsetzung von Trioxan, einem der vor stehend beschriebenen cyclischen Ether und mit einem dritten Monomeren, vorzugsweise einer bifunktionellen Verbindung der Formel 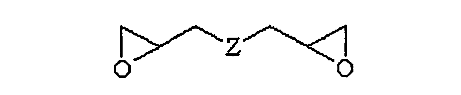 wobei Z eine chemische Bindung, -O- oder -ORO- (R=C₁- bis C₈-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 :1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Polyoxymethylenhomo- und Copolymerisate sind dem Fachmann bekannt und in der Literatur beschrieben.

Die bevorzugten Polyoxymethylencopolymere haben Schmelzpunkte von mindestens 150 °C und Molekulargewichte (Gewichtsmittelwert) M_{w} im Bereich von 2000 bis 1000000, vorzugsweise von 7 000 bis 150 000. Endgruppenstabilisierte Polyoxymethylenpolymerisate, die an den Kettenenden C-C-Bindungen aufweisen, werden besonders bevorzugt. Die eingesetzten Polyoxymethylenpolymere haben im allgemeinen einen Schmelzindex (MVR-Wert 190/2,16) von 0,3 bis 100 cm³/10 min (ISO 1133).
Besonders bevorzugt sind Polyoxymethylenpolymere, die im wesentlichen Oxymethylen- und Oxyethyleneinheiten in der Polymerkette aufweisen. Der Anteil der Oxyethyleneinheiten an den Struktureinheiten der Polymerkette beträgt 0.1 bis 15 mol %, vorzugsweise 0.2 bis 10 mol %. Der Schmelzindex MFI, gemessen nach ISO 1133 bei 190 °C und 2.16 kg Auflagegewicht, beträgt 0,5 -75 g/10 min, bevorzugt 2-60 g/10 min und besonders bevorzugt von 5-35 g/10 min. Das Zahlenmittel des Molekulargewichts beträgt mindestens 5000 g/mol und höchstens 100000 g/mol, bestimmt durch GPC in Dimethylacetamid bei 150 bis 160 °C. An Stelle eines einzelnen Polyoxymethylencopolymerisats ist auch eine Mischung von verschiedenen, unterschiedlich zusammengesetzten Polyoxymethylen-Copolymeren verwendbar. Die Herstellung der Polyoxymethylencopolymere kann mit allgemein bekannten Herstellungsverfahren erfolgen. Ein mögliches Verfahren ist beispielsweise die Copolymerisation von Trioxan mit Dioxolan in Gegenwart allgemein üblicher Mengen von BF₃ und Methylal. Bevorzugt werden Polyoxymethylenpolymere, bei deren Herstellung Trifluormethansulfonsäure verwendet wurde.

Die erfindungsgemäße Formmasse kann weitere übliche Zusatzstoffe einzeln oder als Gemisch bis zu 40 Gew. % enthalten, z.B. Ruße wie zum Beispiel Leitfähigkeitsruße, Säurefänger, Antioxidantien, UV-Stabilisatoren, Haftvermittler, Entformungshilfen, Stoffe zur Verbesserung der elektrischen Leitfähigkeit, Antistatika, Nukleierungsmittel wie Polyoxymethylen-Terpolymere oder Talk, Farbmittel wie anorganischer Pigmente, zum Beispiel Titandioxid, Ultramarinblau, Kobaltblau oder organische Pigmente und Farben wie Phthalocyanine, Anthrachinone, Füllstoffe wie Glaskugeln, Wollastonit, Kreide, Lehm, Molybdändisulfid oder Graphit, anorganische oder organische Fasern wie Glasfasern, Carbonfasern oder Aramidfasern, Gleitmittel wie Seifen und Ester, Stearylstearat, Montansäureester, teilverseifte Montansäureester, Stearinsäuren, polare und/oder unpolare Polyethylenwachse, Poly-α-Olefin-Oligomere, Silikonöle, Polyalkylenglykole und Perfluoralkylether, Polytetrafluorethylen, ultrahochmolekulares Polyethylen, Paraffine fest und flüssig, Stearinsäuren und thermoplastische oder duroplastische Kunststoffadditive, Elastomere und weitere Polymere wie EPDM (Ethylen-Propylen-Dien-Kautschuk), EPM (Ethylen-Propylen-Kautschuke), Polyesterelastomere, Copolymere des Ethylens mit Estern von (Meth)acrylsäureestern und (Meth)acrylamiden Polymethylmethacrylat, Polyethylen, Polystyrol.

Die erfindungsgemäßen Polyoxymethylen-Formmassen können mit den üblichen und bekannten Mischverfahren wie Granulieren, Extrusion oder Kneten hergestellt werden. Bevorzugt werden die erfindungsgemäßen Formmassen hergestellt, indem Polyoxymethylen Polymer mit Zusatzstoffen und Stabilisatoren vermischt und die Mischung anschließend granuliert wird.
Die erfindungsgemäßen eingefärbten Polyoxymethylen-Formmassen verfügen über eine wesentlich verminderte Emission. Die Verminderung der Formaldehydfreisetzung kann schon bei der Herstellung der Formmasse, z.B. beim Granulieren, und auch bei der Verarbeitung beobachtet werden. Somit leistet die erfindungsgemäße Polyoxymethylen-Formmasse einen Beitrag zur Arbeitshygiene und -sicherheit. Vor allem ist jedoch die Formaldehydemission von Formteilen, die durch Spritzguß oder Extrusion hergestellt wurden, wesentlich reduziert. Die Formaldehydemission, gemessen an Platten der Wandstärke 1 mm nach 24 h Lagerdauer beträgt nach VDA 275 vorteilhaft weniger als 40 mg/kg, besonders vorteilhaft weniger als 30 mg/kg, ganz besonders vorteilhaft weniger als 20 mg/kg. Die mechanischen Eigenschaften der erfindungsgemäßen Formmassen entsprechen den üblichen Anforderungen an Polyoxymethylen-Handelsprodukte, so daß die für Polyoxymethylen üblichen Anwendungsfelder und Verarbeitungstechniken ohne Einschränkung genutzt werden können.

Besondere Anwendungsgebiete für die erfindungsgemäßen Formmassen sind Innenausstattungen und Verkleidungen von Verkehrsmitteln wie Automobile, Flugzeuge, Haushaltswaren, Spielzeugartikel, Babyartikel sowie elektronische und elektrotechnische Bauteile und Geräte. Besonders geeignet sind die erfindungsgemäßen Formmassen zur Herstellung von Apparaturen und Instrumenten, oder Teilen davon, für medizinische Anwendungen. Die erfindungsgemäß hergestellten Formmassen weisen im Vergleich zu den derzeit handelsüblichen Produkten die geringste Formaldehydemission auf, besitzen defektfreie Oberflächen und eine hohe Farbstabilität, wenn die Formteile Licht oder Hitze über lange Zeit ausgesetzt sind.

Auf sämtliche in dieser Patentanmeldung erwähnten Referenzen wird hiermit ausdrücklich Bezug genommen. Diese Referenzen sind damit Bestandteil der Offenbarung dieser Patentanmeldung.

### Beispiele

In den anschließenden Beispielen wurden die Materialeigenschaften nach folgenden Methoden bestimmt:
Schmelzindex (MFI) nach ISO 1133 bei 190 °C und 2.16 kg Auflagegewicht;
Zug-E-Modul nach ISO 527
Streckspannung nach ISO 527
Bruchdehnung nach ISO 527

Formaldehydemission: Aus den eingefärbten Polyoxymethylen-Formmassen werden Platten der Wandstärke 1 mm gefertigt. Nach einer Lagerdauer von 24 h wurde die Formaldehydemission aus den Platten nach VDA 275 ermittelt (VDA Empfehlung Nr. 275, Dokumentation Kraftfahrwesen e.V. Juli 1994).
Prüfkörperherstellung: Das Polyacetalgranulat wird durch Spritzguß zu Plättchen mit den Dimensionen 80*50*1 mm geformt. Eine Spritzgießmaschiene Kraus Maffei KM 120/340B wird mit folgenden Spritzgießparametern verwendet: Massetemperatur 195 °C, Fließfrontgeschwindigkeit 200 mm/s, Werkzeugwandtemperatur 85 °C, Nachdruck 900 bar, Nachdruckzeit 30 s, Kühlzeit 10 s, Staudruck 0 bis 10 bar. Die Prüfkörper werden vor der Prüfung für 24 h im Norm-Klimaschrank bei 23 °C und 50 % relativer Luftfeuchte gelagert.
Prüfung: Zwei Prüfkörper werden in einer 1 I Glasflasche über 50 ml E-Wasser an einem Edelstahlhaken aufgehängt und für 3 h im Umlufttrockenschrank bei 60 °C gelagert. Die Prüfkörper werden aus der Prüfflasche entfernt. 5 ml Probenlösung werden in ein Reagenzglas pipettiert, das Reagenzglas wird für 10 Minuten bei 95 °C getempert. Nun werden 3 ml Acetylaceton und 3 ml einer 20 %igen Ammoniumacetatlösung in das Reagenzglas hinzugegeben. Der Formaldehyd bildet mit den Reagentien den Diacetyldihydrolutidin-Komplex, dessen Absorption bei 412 nm photometrisch bestimmt wird. Aus der Absorption wird die Formaldehydkonzentration in der Probenlösung berechnet.

Brabendertest: Die Polyoxymethylen-Formmasse wird bei 210 °C im Brabender-Kneter mit einer Doppelschnecke geschert. Der entweichende Formaldehyd wird mit einem Inertgasstrom ausgetragen und in einer Natriumsulfit-Lösung absorbiert. Die Natriumsulfit-Lösung wird titriert, damit wird der freigesetzte Formaldehyd quantitativ bestimmt. Als Ergebnis erhält man die Formaldehyd-Freisetzung als Funktion der Zeit. Aus der Steigung der Kurve wird durch lineare Extrapolation die Abbaurate bestimmt.
Die Ergebnisse der Materialprüfung aus den Beispielen und Vergleichsbeispielen sind in den Tabellen 1 bis 3 zusammengefaßt. Die Vergleichsversuche sind mit V, die erfindungsgemäßen Beispiele mit B gekennzeichnet.
Bei den Beispielen und Vergleichsbeispielen wurde als Polyoxymethylen Hostaform^{®} C 9021 verwendet. Bei den in Tab. 1 aufgeführten Versuchen enthielt das Polymer 3,4 % Dioxolan als Comonomer, als Initiator wurde Trifluormethansulfonsäure verwendet. Bei den in Tab. 2 aufgeführten Versuchen enthielt das Polymer 3,4% Dioxolan als Comonomer, als Initiator wurde Bortrifluorid verwendet. Bei den in Tab. 3 aufgeführten Versuchen enthielt das Polymer 5,6% Dioxolan als Comonomer, als Initiator wurde Trifluormethansulfonsäure verwendet. Als Antioxidans wurde lrganox^{®} 1010 der Firma Ciba Spezialitätenchemie eingesetzt. Als Fließhilfsmittel wurden Licowachs E oder Licowachs C von Clariant verwendet. In Vergleichsversuchen wurden zur Reduktion der Emission Eurelon der Firma Vantico und Dicyandiamid (DCD), gegebenenfalls in Kombination mit Magnesiumstearat verwendet. Als Schlagzähkomponente eingesetzt wurde Paraloid^{®} EXL 2600 der Firma Röhm & Haas.
Aus den Granulaten der Beispiele und Vergleichsbeispiele wurden im Spritzgußverfahren die Prüfkörper für die Bestimmung des Zug-E-Moduls, der Streckspannung und der Bruchdehnung sowie die Platten zur Ermittlung der Formaldehydemission geformt.
Die erfindungsgemäßen Beispiele zeigen stets eine niedrigere Formaldehydemission der Formteile (VDA 275-Test) und eine niedrigere Formaldehydemission bei der Verarbeitung (Brabendertest). In Tabelle 3 sind die mechanischen Eigenschaften einiger Beispiele und Vergleichsbeispiele angegeben. Es ist zu erkennen, daß die mechanischen Eigenschaften vergleichbar gut bleiben.

Bei Verwendung von Polyoxymethylenpolymeren, bei denen Trifluormethansulfonsäure als Initiator verwendet wurde, lassen sich besonders niedrige Emissionswerte erzielen. Aus Beispiel 25 und Vergleichsbeispiel 25 ist ersichtlich, daß auch bei eingefärbten Formmassen eine Reduktion der Formaldehydemission bei vergleichbaren mechanischen Eigenschaften erzielt werden kann.

**Tab. 1**

| | Stabilisierung | | | | | | | | | | | |
|---|---|---|---|---|---|---|---|---|---|---|---|---|
| Op.No. | Irganox^{®} 1010 | Ca-Citrat | Licowachs^{®} C | Licowachs^{®}E | Melamin | Mg-Stearat | Eurelon^{®} | DCD | T 1020 | Paraloid^{®} EXL2600 | VDA 275-Test | Brabender-Test |
| | [%] | [%] | [%] | [%] | [%] | [%] | [%] | [%] | [%] | [%] | [mg/kg] | [Abb.ppm /h] |
| V 1 | 0,8 | 0,1 | 0,2 | - | 0,07 | - | - | - | 0,5 | 13 | 943,39 | - |
| V 2 | 0,8 | 0,1 | - | 0,2 | 0,07 | - | - | - | 0,5 | 13 | 791,79 | 1653 |
| V 3 | 0,8 | 0,1 | 0,2 | - | - | - | 0,05 | 0,03 | 0,5 | 13 | 661,96 | 895 |
| V4 | 0,8 | 0,1 | - | 0,2 | - | - | 0,05 | 0,03 | 0,5 | 13 | 717,40 | 1024 |
| V 5 | 0,8 | 0,1 | 0,2 | - | 0,07 | - | - | - | 0,5 | 25 | 506,33 | 579 |
| V 6 | 0,8 | 0,1 | - | 0,2 | 0,07 | - | - | - | 0,5 | 25 | 489,52 | 565 |
| V7 | 0,8 | 0,1 | 0,2 | - | - | - | 0,05 | 0,03 | 0,5 | 25 | 455,16 | 378 |
| V 8 | 0,8 | 0,1 | - | 0,2 | - | - | 0,05 | 0,03 | 0,5 | 25 | 425,08 | 343 |
| B 1 | 0,8 | 0,1 | 0,2 | - | 0,07 | 0,1 | - | - | 0,5 | 13 | 22,12 | - |
| B 2 | 0,8 | 0,1 | - | 0,2 | 0,07 | 0,1 | - | - | 0,5 | 13 | 21,21 | 111 |
| V 9 | 0,8 | 0,1 | 0,2 | - | - | 0,1 | 0,05 | 0,03 | 0,5 | 13 | 42,56 | 180 |
| V 10 | 0,8 | 0,1 | - | 0,2 | - | 0,1 | 0,05 | 0,03 | 0,5 | 13 | 47,08 | 164 |
| B 3 | 0,8 | 0,1 | 0,2 | - | 0,07 | 0,1 | - | - | 0,5 | 25 | 24,73 | 85 |
| B 4 | 0,8 | 0,1 | - | 0,2 | 0,07 | 0,1 | - | - | 0,5 | 25 | 36,31 | 158 |
| V 11 | 0,8 | 0,1 | 0,2 | - | - | 0,1 | 0,05 | 0,03 | 0,5 | 25 | 44,48 | 145 |
| V 12 | 0,8 | 0,1 | - | 0,2 | - | 0,1 | 0,05 | 0,03 | 0,5 | 25 | 43,43 | - |
| V 13 | 0,8 | 0,1 | 0,2 | - | 0,07 | - | - | - | 0,5 | 13 | 427,06 | 1083 |
| V 14 | 0,8 | 0,1 | 0,2 | - | 0,07 | - | - | - | 0,5 | 13 | 449,77 | 1538 |

**Tab. 2**

| | Stabilisierung | | | | | | | | | | |
|---|---|---|---|---|---|---|---|---|---|---|---|
| Op.N o. | Irganox^{®} 1010 | Ca-Citrat | Licowachs^{®}C | Melamin | Mg-Stearat | Eurelon^{®} | DCD | T 1020 | Paraloid^{®} EXL 2600 | VDA 275-Test | Brabender-Test |
| | [%] | [%] | [%] | [%] | [%] | [%] | [%] | [%] | [%] | [mg/kg] | [Abb.ppm/h] |
| V 15 | 0,8 | 0,1 | 0,2 | - | - | 0,05 | 0,03 | 0,5 | - | 40,24 | - |
| V 16 | 0,8 | 0,1 | 0,2 | - | - | 0,05 | 0,03 | 0,5 | 13 | 303,67 | 276 |
| V 17 | 0,8 | 0,1 | 0,2 | 0,07 | 0 | - | - | 0,5 | 13 | 871,02 | 466 |
| B 5 | 0,8 | 0,1 | 0,2 | 0,07 | 0,01 | - | - | 0,5 | 13 | 276,95 | 285 |
| B 6 | 0,8 | 0,1 | 0,2 | 0,07 | 0,03 | - | - | 0,5 | 13 | 114,97 | 210 |
| B 7 | 0,8 | 0,1 | 0,2 | 0,07 | 0,05 | - | - | 0,5 | 13 | 71,90 | 169 |
| B 8 | 0,8 | 0,1 | 0,2 | 0,07 | 0,07 | - | - | 0,5 | 13 | 68,39 | 191 |
| B 9 | 0,8 | 0,1 | 0,2 | 0,07 | 0,10 | - | - | 0,5 | 13 | 62,82 | 171 |
| V 18 | 0,8 | 0,1 | 0,2 | - | - | 0,05 | 0,03 | 0,5 | 25 | 253,54 | 309 |
| V 19 | 0,8 | 0,1 | 0,2 | 0,07 | 0 | - | - | 0,5 | 25 | 338,12 | 507 |
| B 10 | 0,8 | 0,1 | 0,2 | 0,07 | 0,01 | - | - | 0,5 | 25 | 266,67 | 362 |
| B 11 | 0,8 | 0,1 | 0,2 | 0,07 | 0,03 | - | - | 0,5 | 25 | 173,27 | 359 |
| B 12 | 0,8 | 0,1 | 0,2 | 0,07 | 0,05 | - | - | 0,5 | 25 | 102,81 | 311 |
| B 13 | 0,8 | 0,1 | 0,2 | 0,07 | 0,07 | - | - | 0,5 | 25 | 99,55 | 336 |
| B 14 | 0,8 | 0,1 | 0,2 | 0,07 | 0,10 | - | - | 0,5 | 25 | 80,86 | 293 |

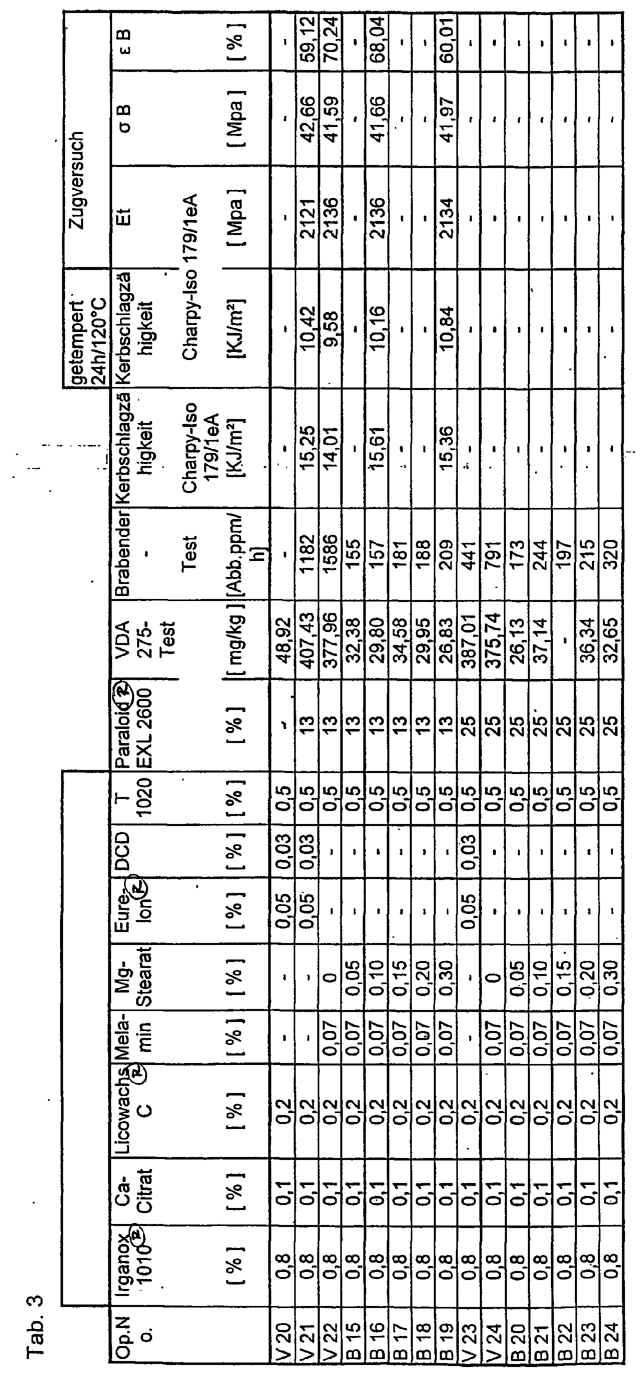

### Beispiel 25

Herstellung des Basispolymeren (Polyoxymethylen Copolymer) In einem Batch-Reaktor wurden bei einer Temperatur von 80 °C und einem Druck von ca. 1 bar 94.4 Gew.-% Trioxan, 5.6 Gew.-% Dioxolan und 350 ppm Methylal vorgelegt. Es wurden 30 ppm BF₃ hinzugegeben. Die Mengenangaben sind auf die gesamte Monomermischung bezogen. Das gebildete Rohpolymer wurde in einer Wasser/Triethylamin-Mischung suspendiert und danach bei 170 °C in einer Wasser/Methanol (10/90) Mischung hydrolysiert. Beim Abkühlen auf Raumtemperatur fiel das Polymer als feines Pulver aus und wurde abgesaugt, mit Wasser gewaschen und getrocknet. Das Produkt besitzt einen Schmelzindex (MFI) von 9 g/10 min). Folgende Komponenten werden zusammengegeben und in einem Henschel-Mischer intensiv vermischt: 190 g Acetylenruß, 330 g Kronos^{®} 2220, 240 g Sicotangelb K 2112, 20 g Renolbraun EKX 851, 300 g Irganox^{®} 245, 200 g Licowachs^{®} E, 70 g Melamin, 50 g Magnesiumstearat, 400 g Tinuvin^{®} 234, 400 g Tinuvin^{®} 770, 13 kg Paraloid^{®} EXL 2600 (Hersteller Rohm&Haas), ad 100 kg Polyoxymethylen-Basispolymer. Die Mischung wird auf.einem Zweischneckenextruder granuliert. Mechanische Eigenschaften: Zug-E-Modul 2100 N/mm², Streckspannung 44,6 N/mm², Bruchdehnung 61 %; Formaldehydemission nach VDA 275: 16 mg/kg,

### Vergleichsbeispiel 25

Folgende Komponenten werden zusammengegeben und in einem Henschel-Mischer intensiv vermischt: 190 g Acetylenruß, 330 g Krono^{®} 2220, 240 g Sicotangelb K 2112, 20 g Renolbraun EKX 851, 600 g Irganox^{®}245, 200 g Licowachs^{®} C, 50 g Eurelon^{®}, 30 g Dicyandiamid, 400 g Tinuvin^{®}234, 400 g Tinuvin^{®}770, 13 kg Paraloid^{®}EXL 2600 (Hersteller Rohm&Haas), ad 100 kg Polyoxymethylen-Basispoylmeren. Die Mischung wird auf einem Zweischneckenextruder granuliert. Das Basispolymer ist mit dem in Beispiel 25 verwendetem Basispolymer identisch. Mechanische Eigenschaften: Zug-E-Modul 2050 N/mm², Streckspannung 42,9 N/mm², Bruchdehnung 55 %, Formaldehydemission nach VDA 275: 225 mg/kg,

## Patentansprüche

1. Polyoxymethylen-Formmasse enthaltend
Komponente (A) 0,01 bis 1,0 Gew.-% eines zyklischen Stabilisators, der mindestens ein Stickstoffatom im Ring enthält,
Komponente (B) 0,001 bis 0,5 Gew.-% eines Alkali- und/oder Erdalkalisalzes einer Carbonsäure mit 10 bis 32 Kohlenstoffatomen,
Komponente (C) 5 bis 50 Gew.-% eines Pfropfcopolymeren aus einem kautschukelastischen, einphasigen Kern auf Basis von Polydien und einer harten Pfropfhülle als Schiagzähmodifikator,
Komponente (D) 0,0-2,0 Gew.-% einer sterisch gehinderten Phenolverbindung,
Komponente (E) 0,0 bis 1,0 Gew.-% mindestens eines Stabilisators aus der Gruppe der Benzotriazolderivate oder Benzophenonderivate oder aromatische Benzoatderivate,
Komponente (F) 0,0 bis 0,8 Gew.-% eines sterisch gehinderten Amins zur Lichtstabilisierung (HALS), und
Komponente (G) ad 100 Gew.-% eines Polyoxymethylen Homo- oder Copolymeren.

2. Polyoxymethylen-Formmasse nach Anspruch 1, **dadurch gekennzeichnet, dass** diese Komponente (A) zu 0,03 bis 0,3 Gew.-%, Komponente (B) zu 0,001 bis 0,5 Gew.-%, Komponente (C) zu 5 bis 40 Gew.-%, Komponente (D) zu 0,1-1,0 Gew.-%, Komponente (E) zu 0,0 bis 0,8 Gew.-%, Komponente (F) zu 0,0 bis 0,5 Gew.-%, und Komponente (G) ad 100 Gew.-% enthält.

3. Polyoxymethylen-Formmasse nach Anspruch 1, **dadurch gekennzeichnet, dass** diese Komponente (A) zu 0,01 bis 1,0 Gew.-%, Komponente (B) zu 0,001 bis 0,5 Gew.-%, Komponente (C) zu 7 bis 30 Gew.-%, Komponente (D) zu 0,2-1,0 Gew.-%, Komponente (E) zu 0,0 bis 1,0 Gew.-%, Komponente (F) zu 0,4 Gew.-%, und Komponente (G) ad 100 Gew.-% enthält.

4. Polyoxymethylen-Formmasse nach einem oder mehreren der Ansprüche 1 bis 3, wobei als Komponente (A) Aminopyridine, 2,6-Diaminopyridin, substituierte und dimere Aminopyridine, Pyrrolidon, Imidazolidinon, Hydantoin, Allantoin, Triamino-1,3,5-Triazin (Melamin), Melamin Formaldehydkondensate, Methylolmelamin einzeln oder als Gemisch verwendet werden.

5. Polyoxymethylen-Formmasse nach einem oder mehreren der Ansprüche 1 bis 4, wobei als Komponente (B) Magnesiumstearat verwendet wird.

6. Polyoxymethylen-Formmasse nach einem oder mehreren der Ansprüche 1 bis 5, wobei die Komponente (C) Pfropfcopolymere aus einem kautschukelastischen, einphasigen Kern auf Basis von Polydien und einer harten Pfropfhülle enthält, die Hülle der Partikel ein- oder zweischalig ausgebildet ist, bei einschaligen Partikeln aus Poly(meth)acrylat und Poly(meth)acrylnitrit besteht, bei zweischaligen Partikeln die innere Schale aus vemetztem Polystyrol und die äußere Schale aus vemetzten Polymethacrylat besteht.

7. Polyoxymethylen-Formmasse nach einem oder mehreren der Ansprüche 1 bis 6, wobei die Komponente (D) Pentaerithrityl-tetrakis -[3-(3,5-di-tert.butyl-4-hydroxyphenyl)-propionat) und/oder Triethylenglykol-bis-[3-(3-tert.butyl-4-hydroxy-5-methylphenyl)-propionat) und/oder 3,3'-Bis[3'-(3,5-di-tert.butyl-4-hydroxyphenyl)-propionohydrazid] und/oder Hexamethylenglykol-bis-[3-(3,5-di-tert.butyl-4-hydroxyphenyl)-propionat] und/oder 3,5-Di-tert.butyl-4-hydroxytoluol enthält.

8. Polyoxymethylen-Formmasse nach einem oder mehreren der Ansprüche 1 bis 7, wobei als Komponente (E) ist 2-[2'-Hydroxy-3',5'-bis(1,1dimethylbenzyl)phenyl-benzotriazol verwendet wird.

9. Polyoxymethylen-Formmasse nach einem oder mehreren der Ansprüche 1 bis 8, wobei die Komponente (F) eine 2,2,6,6-Tetramethyl-4-piperidoverbindung, vorzugsweise Bis-(2,2,6,6-tetramethyl-4-piperidyl)-sebazat, und/oder das Polymer aus Bemsteinsäuredimethylester und 1-(2-Hydroxyethyl)-4-hydroxy-2,2,6,6-tetramethyt-4-piperidin, enthält.

10. Polyoxymethylen-Formmasse nach einem oder mehreren der Ansprüche 1 bis 9, wobei die Komponente (G), das Potyoxymethylenpolymer, unter Verwendung von Trifluormethansulfonsäure als Initiator hergestellt wurde.

11. Verwendung der thermoplastischen Formmasse nach einem oder mehreren der Ansprüche 1 bis 10 zur Herstellung von Formkörpern und Folien.

12. Formkörper herstellbar aus einer thermoplastischen Formmasse nach einem oder mehreren der Ansprüche 1 bis 10.

## Claims

1. A polyoxymethylene molding composition comprising
Component (A) from 0.01 to 1.0% by weight of a cyclic stabilizer which contains at least one nitrogen atom in the ring
Component (B) from 0.001 to 0.5% by weight of a carboxylate of an alkali metal and/or of an alkaline earth metal having from 10 to 32 carbon atoms
Component (C) from 5 to 50% by weight of a graft copolymer made from an elastomeric, single-phase core based on polydiene and from a hard outer graft layer, as impact modifier
Component (D) from 0.0 to 2.0% by weight of a sterically hindered phenol compound
Component (E) from 0.0 to 1.0% by weight of at least one stabilizer from the group of the benzotriazole derivatives or benzophenone derivatives or aromatic benzoate derivatives
Component (F) from 0.0 to 0.8% by weight of a sterically hindered amine as light stabilizer (HALS), and
Component (G) a polyoxymethylene homo- or copolymer to 100% by weight.

2. The polyoxymethylene molding composition as claimed in claim 1, which comprises from 0.03 to 0.3% by weight of component (A), from 0.001 to 0.5% by weight of component (B), from 5 to 40% by weight of component (C), from 0.1 to 1.0% by weight of component (D), from 0.0 to 0.8% by weight of component (E), from 0.0 to 0.5% by weight of component (F), and component (G) to 100% by weight.

3. The polyoxymethylene molding composition as claimed in claim 1, which comprises from 0.01 to 1.0% by weight of component (A), from 0.001 to 0.5% by weight of component (B), from 7 to 30% by weight of component (C), from 0.2 to 1.0% by weight of component (D), from 0.0 to 1.0% by weight of component (E), 0.4% by weight of component (F), and component (G) to 100% by weight.

4. The polyoxymethylene molding composition as claimed in one or more of claims 1 to 3, where the component (A) used comprises aminopyridines, 2,6-diaminopyridine, substituted and dimeric aminopyridines, pyrrolidone, imidazolidinone, hydantoin, allantoin, triamino-1,3,5-triazine (melamine), melamine-formaldehyde condensates, methylolmelamine, individually or as a mixture.

5. The polyoxymethylene molding composition as claimed in one or more of claims 1 to 4, where the component (B) used comprises magnesium stearate.

6. The polyoxymethylene molding composition as claimed in one or more of claims 1 to 5, where component (C) comprises graft copolymers made from an elastomeric, single-phase core based on polydiene and from a hard outer graft layer, and where the outer layer of the particles has a single- or dual-shell structure, and in the case of single-shell particles is composed of poly(meth)acrylate and poly(meth)acrylonitrile, and where in the case of dual-shell particles the inner shell is composed of crosslinked polystyrene and the outer shell is composed of crosslinked polymethacrylate.

7. The polyoxymethylene molding composition as claimed in one or more of claims 1 to 6, where component (D) comprises pentaerythrityl tetrakis[3-(3,5-di-tert-butyl-4-hydroxyphenyl)propionate] and/or triethylene glycol bis[3-(3-tert-butyl-4-hydroxy-5-methylphenyl)proprionate] and/or 3,3'-bis[3'-(3,5,-di-tert-butyl-4-hydroxyphenyl)propiono]hydrazide and/or hexamethylene glycol bis[3-(3,5-di-tert-butyl-4-hydroxyphenyl)proprionate] and/or 3,5-di-tert-butyl-4-hydroxytoluene.

8. The polyoxymethylene molding composition as claimed in one or more of claims 1 to 7, where the component (E) used comprises 2-[2'-hydroxy-3',5'-bis(1,1-dimethylbenzyl)phenyl]benzotriazole.

9. The polyoxymethylene molding composition as claimed in one or more of claims 1 to 8, where component (F) comprises a 2,2,6,6-tetramethyl-4-piperidyl compound, preferably bis-(2,2,6,6-tetramethyl-4-piperidyl) sebacate, and/or the polymer made from dimethyl succinate and 1-(2-hydroxyethyl)-4-hydroxy-2,2,6,6-tetramethyl-4-piperidine.

10. The polyoxymethylene molding composition as claimed in one or more of claims 1 to 9, where component (G), the polyoxymethylene polymer, has been prepared using trifluoromethanesulfonic acid as initiator.

11. The use of the thermoplastic molding composition as claimed in one or more of claims 1 to 10 for producing moldings or films.

12. A molding obtainable from a thermoplastic molding composition as claimed in one or more of claims 1 to 10.

## Revendications

1. Masse de formage à base de polyoxyméthylène contenant :
Composant (A) : de 0,01 à 1,0 % en poids d'un agent stabilisant cyclique qui contient dans son cycle au moins un atome d'azote,
Composant (B) : de 0,001 à 0,5 % en poids d'un sel alcalin et/ou alcalino-terreux d'un acide carboxylique ayant 10 à 32 atomes de carbone,
Composant (C) : de 5 à 50 % en poids d'un copolymère greffé, composé d'un noyau à base de polydiène, ayant l'élasticité du caoutchouc et monophasé, ainsi que d'une enveloppe greffée et dure en tant qu'agent modificateur de résilience,
Composant (D) : 0,0-2,0 % en poids d'un composé phénolique chélaté,
Composant (E) : de 0,0 à 1,0 % en poids d'au moins un agent stabilisant issu du groupe des dérivés de benzotriazole, de benzophénone ou des dérivés de benzoates aromatiques,
Composant (F) : de 0,0 à 0,8 % en poids d'une amine chélatée en vue de la stabilisation à la lumière (HALS), et
Composant (G) : qsp 100 % en poids d'un homo- ou d'un copolymère de polyoxyméthylène.

2. Masse de formage à base de polyoxyméthylène selon la revendication 1, **caractérisée en ce que** ce composant (A) contient de 0,03 à 0,3 % en poids, ce composant (B) de 0,001 à 0,5 % en poids, ce composant (C) de 5 à 40 % en poids, ce composant (D) de 0,1 à 1,0 % en poids, ce composant (E) de 0,0 à 0,8 % en poids, ce composant (F) de 0,0 à 0,5 % en poids et ce composant (G) qsp à 100 % en poids.

3. Masse de formage à base de polyoxyméthylène selon la revendication 1, **caractérisée en ce que** ce composant (A) contient de 0,01 à 1,0 % en poids, ce composant (B) de 0,001 à 0,5 % en poids, ce composant (C) de 7 à 30 % en poids, ce composant (D) de 0,2-1,0 % en poids, ce composant (E) de 0,0 à 1,0 % en poids, ce composant (F) 0,4 % en poids et ce composant (G) qsp à 100 % en poids.

4. Masse de formage à base de polyoxyméthylène selon une ou plusieurs des revendications 1 à 3, dans laquelle en tant que composant (A) sont utilisés isolément ou en mélange l'aminopyridine, la 2,6-diaminopyridine, des aminopyridines substituées et dimères, la pyrrolidone, -l'imidazolidinone, l'hydantoïne, l'allantoïne, la triamino-1,3,5-triazine (mélamine), des produits de condensation mélamine-formaldéhyde, la méthylolmélamine.

5. Masse de formage à base de polyoxyméthylène selon une ou plusieurs des revendications 1 à 4, dans laquelle en tant que composant (B) est utilisé du stéarate de magnésium.

6. Masse de formage à base de polyoxyméthylène selon une ou plusieurs des revendications 1 à 5, dans laquelle le composant (C) contient des polymères greffés, composés d'un noyau à base de polydiènes, ayant l'élasticité du caoutchouc et monophasé, ainsi que d'une enveloppe greffée et dure, dans laquelle l'enveloppe des particules présente une configuration mono- ou bicouche, les particules en monocouche se composant de poly(méth)acrylate et de poly(méth)acrylonitrile, tandis que dans le cas de particules en bicouche la couche interne se compose de polystyrène réticulé et la couche externe de polyméthacrylate réticulé.

7. Masse de formage à base de polyoxyméthylène selon une ou plusieurs des revendications 1 à 6, dans laquelle le composant (D) contient du tétrakis-[3-(3,5-di-tertiobutyle-4-hydroxyphényle)-propionate] de penta-érythritol et/ou du bis-[3-(3-tertiobutyle-4-hydroxy-5-méthylphényle)-propionate] de triéthylèneglycol et/ou de la 3,3'-bis[3'-(3,5-di-tertiobutyle-4-hydroxy-phényle)-propionohydrazide] et/ou du bis-[3-(3,5-di-tertiobutyle-4-hydroxyphényle)-propionate] d'hexaméthylèneglycol et/ou du 3,5-di-tertiobutyle-4-hydroxytoluène.

8. Masse de formage à base de polyoxyméthylène selon une ou plusieurs des revendications 1 à 7, dans laquelle en tant que composant (E) est utilisé le 2-[2'-hydroxy-3',5'-bis(1,1-diméthylbenzyle)-phényle]-benzo-triazole.

9. Masse de formage à base de polyoxyméthylène selon une ou plusieurs des revendications 1 à 8, dans laquelle le composant (F) contient un composé de 2,2,6,6-tétraméthyle-4-pipéridyle, de préférence le sébaçate de bis-(2,2,6,6-tétraméthyle-4-pipéridyle), et/ou le polymère issu du diméthylester d'acide succinique et de la 1-(2-hydroxyéthyle)-4-hydroxy-2,2,6,6-tétraméthyle-4-pipéridine.

10. Masse de formage à base de polyoxyméthylène selon une ou plusieurs des revendications 1 à 9, dans laquelle le composant (G), à savoir le polymère de polyoxyméthylène, est préparé par utilisation d'acide trifluorométhanesulfonique en tant qu'initiateur.

11. Utilisation de la masse de formage thermoplastique selon une ou plusieurs des revendications 1 à 10 en vue de la fabrication de masses moulées et de films.

12. Corps moulé susceptible d'être fabriqué à partir d'une masse de formage thermoplastique selon une ou plusieurs des revendications 1 à 10.
